# EUROPEAN PATENT APPLICATION

(11) **EP 4 119 369 A1**
(43) Date of publication of application: **18.01.2023**
(21) Application number: 21185783.4
(22) Date of filing: 15.07.2021
(51) Int. Cl.: B60H 1/00, B60H 1/32

(54) **A TRANSPORT CLIMATE CONTROL SYSTEM AND METHOD**

(71) Applicant: Thermo King Corporation, Minneapolis, MN 55420 (US)
(72) Inventor: CONNEELY, Peadar, Galway, H91V1F6 (IE); KEAVENEY, Sean, Galway, H65WC58 (IE); DONNELLAN, Wayne, Galway (IE); KENNEDY, Pierce D., Galway, H91 XHNO (IE)
(74) Representative: Haseltine Lake Kempner LLP

(57) **Abstract**

A transport climate control system is described which comprises a controller configured to determine a power demand of a climate control circuit of the system and to provide power to the climate control circuit in a first power mode (306) when the power demand is above a power threshold and to provide power to the climate control circuit in a second power mode (308) when the power demand is at or below the power threshold. In the first power mode, power is provided from a prime mover and, in the second power mode, power is provided from an energy storage source and not the prime mover. The controller is configured to control a fan of an evaporator such that it operates at a lower speed when in the second power mode than when in the first power mode.

## Description

### Field

Embodiments of this disclosure relate generally to transport climate control systems and methods.

### Background

A transport climate control system can include, for example, a transport refrigeration system (TRS) and/or a heating, ventilation and air conditioning (HVAC) system. A TRS is generally used to control an environmental condition (e.g., temperature, humidity, air quality, and the like) within a climate-controlled space of a transport unit (e.g., a truck, a container (such as a container on a flat car, an intermodal container, etc.), a box car, a semi-tractor, a bus, or other similar transport unit). The TRS can maintain environmental condition(s) of the climate-controlled space to maintain cargo (e.g., produce, frozen foods, pharmaceuticals, etc.). In some embodiments, the transport unit can include a HVAC system to control an environmental condition (e.g., temperature, humidity, air quality, etc.) within a passenger space of the transport unit.

Hybrid transport climate control systems are known which include an engine and a battery power source. Such systems are able to utilize battery power in certain circumstances to improve efficiency. However, there still remains a need to optimize control and energy usage in such systems.

### Summary

In accordance with an aspect, there is provided a transport climate control system, comprising: a climate control circuit having a compressor, a condenser, an evaporator and an expansion valve to provide conditioned air to a climate-controlled space of a transport unit; a prime mover configured to provide power to components of the climate control circuit; an energy storage source configured to provide power to components of the climate control circuit; and a controller configured to determine a power demand of the climate control circuit and to provide power to the climate control circuit in a first power mode when the power demand is above a power threshold and to provide power to the climate control circuit in a second power mode when the power demand is at or below the power threshold; wherein, in the first power mode, power is provided from the prime mover and, in the second power mode, power is provided from the energy storage source and not the prime mover; wherein the controller is configured to control a fan of the evaporator such that it operates at a lower speed when in the second power mode than when in the first power mode.

The controller may be configured to set the speed of the evaporator fan based on remaining energy in the energy storage source.

The controller may be configured to predict a duration of second power mode usage and set the speed of the evaporator fan based on the predicted duration and the remaining energy in the energy storage source

In the second power mode, power may be provided exclusively from the energy storage source.

In the first power mode, power may be provided exclusively from the prime mover.

In the second power mode, the prime mover may be switched off.

The controller may be configured to use the second power mode when the compressor of the climate control circuit is not active.

The controller may be configured to use the second power mode when a setpoint temperature is reached.

The controller may dynamically determine the threshold power.

The controller may be configured to determine the threshold power based on the power available in the second power mode.

The energy storage source may comprise one or more batteries.

The controller may determine the power demand based on an operating mode or condition of the climate control circuit.

In accordance with another aspect, there is provided a method for controlling a transport climate control system, comprising: determining a power demand of a transport climate control circuit of the system; where the demand is above a power threshold, providing power to the transport climate control circuit in a first power mode using a prime mover where an evaporator fan of the transport climate control circuit operates at a first speed; and where the demand is at or below the power threshold, providing power to the transport climate control circuit in a second power mode using an energy storage source and not the prime mover where the evaporator fan of the transport climate control circuit operates at a second speed which is lower than the first speed.

In accordance with another aspect, there is provided a transport climate control system, comprising: a climate control circuit having a compressor, a condenser, an evaporator and an expansion valve to provide conditioned air to a climate-controlled space of a transport unit; an energy storage source configured to provide power to components of the climate control circuit; a prime mover configured to provide power to components of the climate control circuit; one or more solar panels configured to provide power to components of the climate control circuit and/or the energy storage source; and a controller configured to: estimate a future power output of the one or more solar panels at a time *t;* where the future power output exceeds a threshold value, provide power to components of the climate control circuit using the energy storage source in preference of the prime mover so as to deplete the energy storage source before the time *t;* and recharge the energy storage source using the one or more solar panels at the time *t.*

The controller may receive weather forecast information and determine the future power output of the one or more solar panels based on the weather forecast information.

The controller may receive GPS information and determine the future power output of the one or more solar panels based on the weather forecast information and the GPS information.

The controller may receive route information and determines the future power output of the one or more solar panels based on the weather forecast information for an estimated location of the transport unit at time *t.*

The weather forecast information may include solar intensity and/or cloud cover data.

In accordance with another aspect, there is provided a method for controlling a transport climate control system, comprising: estimate a future power output of one or more solar panels of the transport climate control system at a time *t;* and where the future power output exceeds a threshold value, providing power to components of a climate control circuit of the transport climate control system using an energy storage source in preference of a prime mover so as to deplete the energy storage source before the time *t;* and recharging the energy storage source using the one or more solar panels at the time *t.*

### Drawings

References are made to the accompanying drawings that form a part of this disclosure and which illustrate embodiments in which the systems and methods described in this specification can be practiced.
Fig. 1A illustrates a perspective view of a climate-controlled transport unit with a transport climate control system attached to a tractor, according to one embodiment.
Fig. 1B illustrates a side view of a truck with a transport climate control system, according to one embodiment.
Fig. 1C illustrates a side view of a van with a transport climate control system, according to one embodiment.
Fig. 1D illustrates a perspective view of a passenger vehicle including a transport climate control system, according to one embodiment.
Fig. 2 illustrates a block diagram schematic of one embodiment of a power system for powering a transport climate control system, according to one embodiment.
Fig. 3 is a flowchart of a method for controlling a transport climate control system according to one embodiment.
Fig. 4 is a flowchart of a method for controlling a transport climate control system according to another embodiment.

### Detailed Description

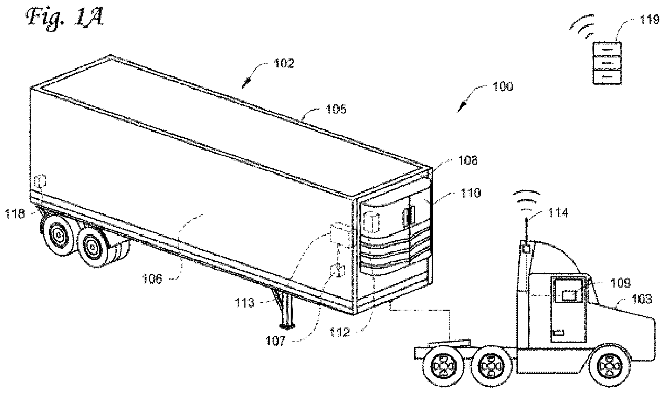

Fig. 1A illustrates an embodiment of a climate-controlled transport unit 102 attached to a tractor 103. The climate-controlled transport unit 102 includes a transport climate control system 100 for a transport unit 105. The tractor 103 is attached to and is configured to tow the transport unit 105. The transport unit 105 shown in Fig. 1A is a trailer. It will be appreciated that the embodiments described herein are not limited to tractor and trailer units, but can apply to any type of transport unit (e.g., a truck, a container (such as a container on a flat car, an intermodal container, a marine container, etc.), a box car, a semi-tractor, a bus, or other similar transport unit), etc.

The transport climate control system 100 includes a climate control unit (CCU) 110 that provides environmental control (e.g. temperature, humidity, air quality, etc.) within a climate-controlled space 106 of the transport unit 105. The transport climate control system 100 also includes a programmable climate controller 107 and one or more sensors (not shown) that are configured to measure one or more parameters of the transport climate control system 100 (e.g., an ambient temperature outside of the transport unit 105, a space temperature within the climate-controlled space 106, an ambient humidity outside of the transport unit 105, a space humidity within the climate-controlled space 106, etc.) and communicate parameter data to the climate controller 107.

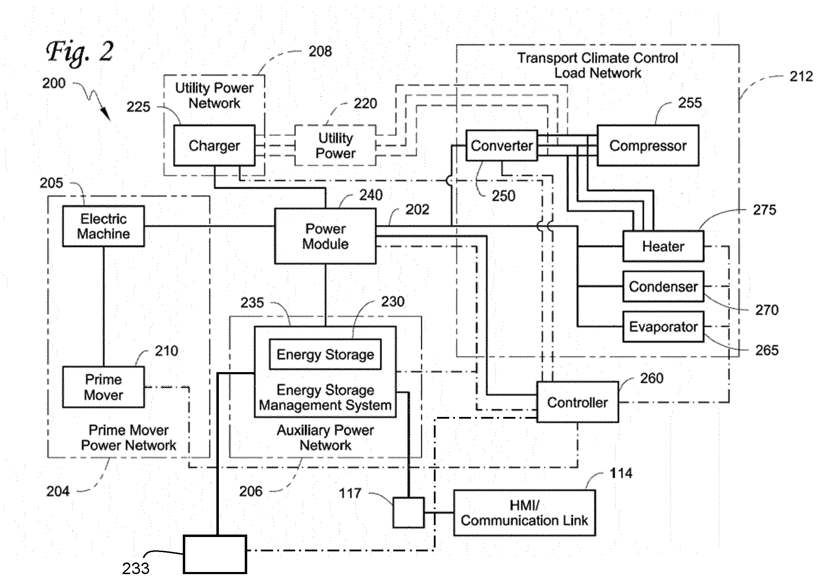

The CCU 110 is disposed on a front wall 108 of the transport unit 105. In other embodiments, it will be appreciated that the CCU 110 can be disposed, for example, on a rooftop or another wall of the transport unit 105. The CCU 110 includes a transport climate control circuit (see Fig. 2) that connects, for example, a compressor, a condenser, an evaporator and an expansion valve to provide conditioned air within the climate-controlled space 106.

The climate controller 107 may comprise a single integrated control unit 112 or may comprise a distributed network of climate controller elements 112, 113. The number of distributed control elements in a given network can depend upon the particular application of the principles described herein. The climate controller 107 is configured to control operation of the transport climate control system 100 including the transport climate control circuit.

In an embodiment, climate controller 107 is configured to obtain one or more route parameters. The one or more route parameters may include, for example, a route to be traveled by the transport unit 105 including the transport climate control system 100, a type of goods being carried in the climate-controlled space 106 conditioned by the transport climate control system 100, a number of stops to be made by the transport unit 105 during the route, an estimated number of times a door providing access to the climate-controlled space 106 will be opened during the route, an estimated amount of time the door providing access to the climate-controlled space 106 will be open during the route.

In an embodiment, climate controller 107 is configured to obtain the one or more route parameters via communications link 114, such as from a remote server 119. In an embodiment, the climate controller 107 is configured to direct display 109 to prompt a user to input the one or more route parameters, and obtains the one or more route parameters from a human-machine interface included in the display 109, for example in the form of a user input device such as a touch-screen, keyboard, keypad, or the like.

The climate controller 107 is configured to obtain one or more conditions impacting the route from the remote server 119 via the communications link 114. The one or more conditions impacting the route may include, for example, a weather forecast, current weather data, a traffic prediction, current traffic data, charging system location data, and customer delivery time constraints.

The climate controller 107 is configured to receive the energy level of the energy storage source, for example from an energy storage management such as a battery management system of a battery included in CCU 110.

Communications link 114 is operatively connected to climate controller 107 and provides communication between climate controller 107 and remote server 119 such that climate controller 107 may, for example, obtain one or more conditions impacting the route from remote server 119. Communications link 114 may be, for example, a wireless modem configured to use a cellular data network such as 3G, 4G, LTE, or the like to communicate with remote server 119 via the internet.

Remote server 119 is a server, separate from the tractor 103 and climate-controlled transport unit 102. Remote server 119 is configured to make one or more conditions impacting a route of the transport unit 105 available to climate controller 107. The one or more conditions impacting the route may include, for example, a weather forecast, current weather data, a traffic prediction, current traffic data, charging system location data, and customer delivery time constraints. In an embodiment, remote server 119 is incorporated into or in communication with a dispatching or fleet management system. In an embodiment, remote server 119 is configured to supply climate controller 107 with one or more of the route parameters including, for example, the route to be traveled by the transport unit including the transport climate control system, the type of goods being carried in a space conditioned by the transport climate control system, the number of stops to be made by the transport unit during the route, the estimated number of times a door of the space conditioned by the transport climate control system will be opened during the route, the estimated amount of time the door providing access to the climate-controlled space 106 will be open during the route, etc.

Tractor 103 includes display 109. The display 109 may be connected to climate controller 107, and climate controller 107 may direct particular messages such as alerts and notifications to be presented on display 109. In an embodiment, display 109 further includes a user input such as a touch-screen, keypad, keyboard, or the like to serve as a human-machine interface (HMI), for example to prompt the input of and accept input of one or more route parameters such as route duration, number of door opening events, average duration of door opening events, and the like.

The climate-controlled transport unit 102 includes door sensor 118 located at a door (not shown) of the climate-controlled space 106 and configured to determine whether the door (not shown) of climate-controlled space 106 is open or closed. Door sensor 118 may be, for example, a mechanical, electrical, or optical sensor. Door sensor 118 may be in communication with climate controller 107, for example via wired or wireless communications.

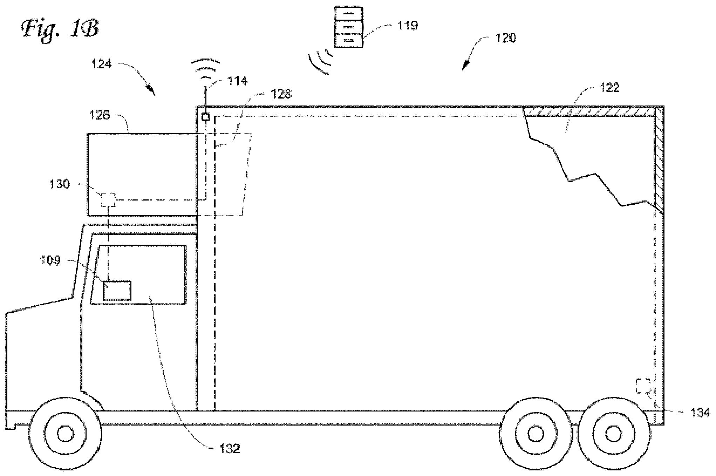

Fig. 1B depicts a temperature-controlled straight truck 120 that includes a climate-controlled space 122 for carrying cargo and a transport climate control system 124. The transport climate control system 124 includes a CCU 126 that is mounted to a front wall 128 of the load space 112. The CCU 126 is controlled via a climate controller 130 to provide climate control within the climate-controlled space 122. The CCU 126 can include, amongst other components, a transport climate control circuit (see Fig. 2) that connects, for example, a compressor, a condenser, an evaporator and an expansion valve to provide climate control within the climate-controlled space 122.

The transport climate control system 124 also includes a programmable climate controller 130 and one or more sensors (not shown) that are configured to measure one or more parameters of the transport climate control system 124 (e.g., an ambient temperature outside of the truck 120, a space temperature within the climate-controlled space 122, an ambient humidity outside of the truck 120, a space humidity within the climate-controlled space 122, etc.) and communicate parameter data to the climate controller 130. The climate controller 130 is configured to control operation of the transport climate control system 124 including the transport climate control circuit.

Straight truck 120 includes communications link 114 as described above. Communications link 114 allows climate controller 130 to communicate with remote server 119 as described above. Straight truck 120 includes display 109, for example located in the cabin 132.

The straight truck 120 includes door sensor 134 located at a door (not shown) of the climate-controlled space 122 and configured to determine whether the door (not shown) of climate controlled space 122 is open or closed. Door sensor 134 may be, for example, a mechanical, electrical, or optical sensor. Door sensor 134 may be in communication with climate controller 130, for example via wired or wireless communications.

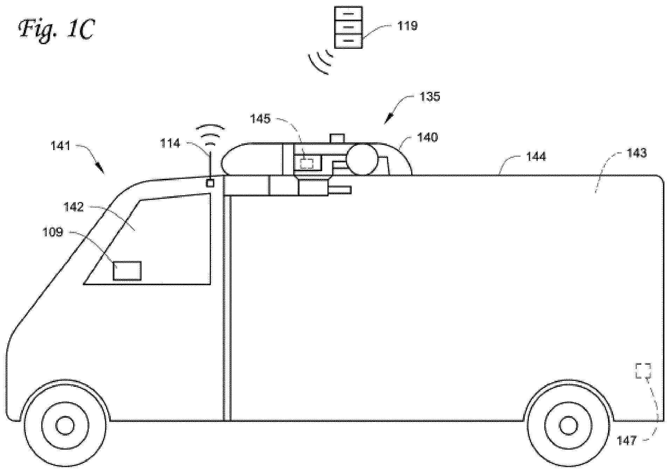

Fig. 1C depicts a temperature-controlled van 141 that includes a climate-controlled space 143 for carrying cargo and a transport climate control system 135 for providing climate control within the climate-controlled space 143. The transport climate control system 135 includes a CCU 140 that is mounted to a rooftop 144 of the climate-controlled space 143. The transport climate control system 135 can include, amongst other components, a transport climate control circuit (see Fig. 2) that connects, for example, a compressor, a condenser, an evaporator and an expansion valve to provide climate control within the climate-controlled space 143.

The transport climate control system 135 also includes a programmable climate controller 145 and one or more sensors (not shown) that are configured to measure one or more parameters of the transport climate control system 135 (e.g., an ambient temperature outside of the van 141, a space temperature within the climate-controlled space 143, an ambient humidity outside of the van 141, a space humidity within the climate-controlled space 143, etc.) and communicate parameter data to the climate controller 145. The climate controller 145 is configured to control operation of the transport climate control system 135 including the transport climate control circuit.

Temperature-controlled van 141 includes communications link 114 as described above. Communications link 114 allows climate controller 145 to communicate with remote server 119 as described above. Temperature-controlled van 141 includes display 109, for example located in the cabin 142 of the temperature-controlled van 141.

The temperature-controlled van 141 includes door sensor 147 located at a door (not shown) of the climate-controlled space 143 and configured to determine whether the door (not shown) of climate-controlled space 143 is open or closed. Door sensor 147 may be, for example, a mechanical, electrical, or optical sensor. Door sensor 144 may be in communication with climate controller 145, for example via wired or wireless communications.

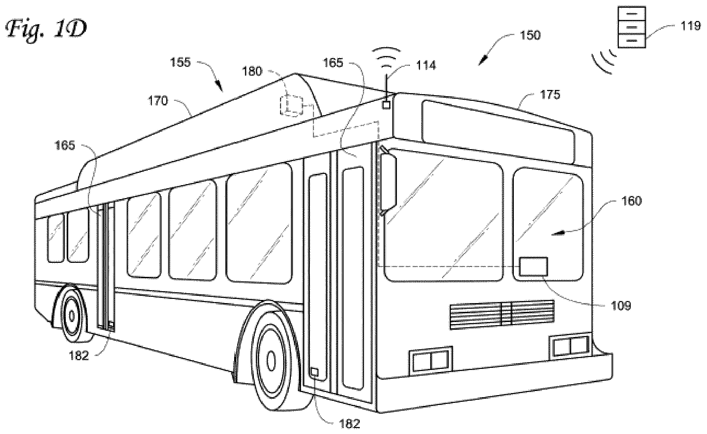

Fig. 1D is a perspective view of a vehicle 150 including a transport climate control system 155, according to one embodiment. The vehicle 150 is a mass-transit bus that can carry passenger(s) (not shown) to one or more destinations. In other embodiments, the vehicle 150 can be a school bus, railway vehicle, subway car, or other commercial vehicle that carries passengers. The vehicle 150 includes a climate-controlled space (e.g., passenger compartment) 160 that can accommodate a plurality of passengers. The vehicle 150 includes doors 165 that are positioned on a side of the vehicle 150. In the embodiment shown in Fig. 1D, a first door 165 is located adjacent to a forward end of the vehicle 150, and a second door 165 is positioned towards a rearward end of the vehicle 150. Each door 165 is movable between an open position and a closed position to selectively allow access to the climate-controlled space 160. The transport climate control system 155 includes a CCU 170 attached to a roof 175 of the vehicle 150.

The CCU 170 includes a transport climate control circuit (not shown) that connects, for example, a compressor, a condenser, an evaporator and an expansion device to provide conditioned air within the climate-controlled space 160. The transport climate control system 155 also includes a programmable climate controller 180 and one or more sensors (not shown) that are configured to measure one or more parameters of the transport climate control system 155 and communicate parameter data to the climate controller 180. The climate controller 180 may comprise a single integrated control unit or may comprise a distributed network of climate controller elements. The number of distributed control elements in a given network can depend upon the particular application of the principles described herein. The climate controller 180 is configured to control operation of the transport climate control system 155 including the transport climate control circuit.

Vehicle 150 includes communications link 114 as described above. Communications link 114 allows climate controller 180 to communicate with remote server 119 as described above. Vehicle 150 includes display 109, within the climate-controlled space 160, for example in view of the driver's seat (not shown).

The vehicle 150 includes door sensors 182, positioned, for example, at each of doors 165 and configured to determine whether any of doors 165 are open or closed. Door sensors 182 may be, for example, mechanical, electrical, or optical sensors. Door sensors 182 may be in communication with climate controller 180, for example via wired or wireless communications.

Fig. 2 illustrates a block diagram schematic of one embodiment of a power system 200 for powering a transport climate control system. The power system 200 can power the transport climate control systems 100, 124, 135, 155 shown in Figs. 1A-1D. The power system 200 includes a prime mover power network 204, an auxiliary power network 206, a utility power network 208, and a transport climate control load network 212 connected to a power conversion module 240. In other embodiments, the power system 200 may not include a utility power network 208.

The power system 200 can use one or more of the prime mover power network 204, the auxiliary power network 206 and the utility power network 208 at any given time to provide power to the transport climate control load network 212.

The prime mover power network 204 includes a prime mover 210, such as an internal combustion engine (for example, a diesel engine), and an electric machine 205 that can provide electric power to the power conversion module 240. The prime mover 210 is configured to generate mechanical power and the electric machine 210 is configured to convert the mechanical power to electric power. The generated electric power is then sent by the prime mover power network 205 to the power conversion module 240. The prime mover 210 and the electric machine 205 can be part of a generator set that provides power to the transport climate control load network 212. The prime mover 210 and the electric machine 205 can be part of a CCU (e.g., the CCU 110, 126, 140, 170 shown in Figs. 1A-D) to provide power to the transport climate control load network 212.

In some embodiments, the electric machine 205 can be an electrical generator that can provide DC power to the transport climate control load network 212. In some embodiments, the electric machine 205 can include an alternator and a rectifier or an AC-DC converter (not shown) that rectifies or converts the AC power generated by the electric machine 205 to a DC power.

The auxiliary power network 206 includes an energy storage source 230 and an energy storage management system 235. In some embodiments, the auxiliary power network 206 can housed within a CCU. In other embodiments, the auxiliary power network 206 can be external to the CCU.

In some embodiments, the energy storage source 230 can include one or more batteries. Each of the batteries can also be connected to the power conversion module 240. In some embodiments, the energy storage source 230 can provide 12 VDC or 24 VDC. In other embodiments, the energy storage source 230 can provide 48VDC.

The energy storage management system 235 is configured to monitor a charge level of one or more batteries of the energy storage source 230 and charge the one or more batteries of the energy storage source 230. The energy storage management system 235 can communicate with, for example, the controller 260 to provide a charge level of one or more batteries of the energy storage source 230. Also, the energy storage management system 235 can receive instructions from, for example, the controller 260 indicating the amount of power from the energy storage source 230 that should be supplied to the power conversion module 240.

The auxiliary power network 206 may include one or more solar panels 233 which are used to charge the energy storage source 230. In some embodiments, the solar panels 233 may provide power directly to the transport climate control load network 212 when sufficient power is being generated. In other embodiments, the output from the solar panels 233 may always be buffered by the energy storage source 230 before being used by the transport climate control network 212.

The power conversion module 240 is configured to convert power from both of the prime mover power network 204 and the auxiliary power network 206 to a load power compatible with one or more loads of the transport climate control load network 212. That is, the power conversion module 240 is configured to buck or boost power from the prime mover power network 204 and is configured to buck or boost power from the auxiliary power network 206 to obtain the desired load power. In some embodiments, the power conversion module 240 can include one or more DC/DC converters. The load power outputted by the power conversion module 240 can then be provided on a load DC bus 202 to the transport climate control load network 212. In some embodiments, the load power can be a low voltage DC power (e.g., between 0-60V DC). In other embodiments, the load power can be a high voltage DC power (e.g., between 60- 1500V DC).

The power system 200, and particularly the power conversion module 240, is controlled by the controller 260. The controller 260 can be, for example, the controller 107, 130, 145 and 180 shown in Figs. 1A-D. In some embodiments, the power conversion module 240 can monitor the amount of current and/or voltage provided by the prime mover power network 204. Also, in some embodiments, the power conversion module 240 can monitor the amount of current and/or voltage drawn by components of the transport climate control load network 212. The power conversion module 240 can be configured to communicate the amount of current and/or voltage provided by the prime mover power network 204 and the amount of current and/or voltage drawn by components of the transport climate control load network 212.

Components of the transport climate control load network 212 can be, for example, part of a CCU that is mounted to the body of the vehicle (for example, truck, van, etc.). In some embodiments, the CCU can be above the cab of the truck (as shown in FIG. 1A). In another embodiment, the CCU can be on the top of the TU (for example, a top of a box where the external condensers are located) (see FIG. 1B). In some embodiments, the components of the transport climate control load network 212 can be DC powered components. In some embodiments, the components of the transport climate control load network 212 can be AC powered components. In some embodiments, the transport climate control load network 212 can include both DC powered components and AC powered components.

As shown in FIG. 2, the transport climate control load network 212 includes at least one compressor 255, one or more evaporator (fans) blowers 265, one or more condenser fans 270 and a heater 275. It will be appreciated that in some embodiments, the transport climate control load network 212 does not include the heater 275. It will further be appreciated that in some embodiments, the transport climate control load network 212 can include thermal management of batteries, power electronics, etc. The transport climate control load network 212 also includes an inverter 250 that is configured to boost the load power and convert the boosted load power to an AC load power. That is, the inverter 250 is configured to boost power from the DC load bus 202 and converts the power to AC power to drive the compressor 255. In some embodiments, the inverter 250 can convert the load power to a high voltage AC power. As shown in FIG. 2, the inverter 250 is configured to power the compressor 255 and optionally the heater 275. It will be appreciated that in other embodiments, the inverter 250 can power other components of the transport climate control load network 212 such as, for example, the one or more evaporator blowers 265, the one or more condenser fans 270, etc. In some embodiments, the inverter 250 can be a Compressor Drive Module (CDM).

In some embodiments, the inverter 250 can convert low voltage DC power (for example, 12VDC, 24VDC, 48 VDC) from the load DC bus 202 and provide AC power (for example, 230 VAC three phase, 460 VAC three phase, etc.) to drive the compressor 255. In particular, the inverter 250 drives the compressor 255 to meet demand of the transport climate control system.

The load DC bus 202 is connected to and powers each of the inverter 250, the one or more evaporator blowers 265, the one or more condenser fans 270, the heater 275, and the controller 260. It will be appreciated that the inverter 250 with the compressor 255 can require the most power of the various loads of the transport climate control load network 212. As shown in FIG. 2, in some embodiments, the inverter 250 can also power the heater 275.

The utility power network 208 is configured to charge the energy storage source 230 of the auxiliary power network 206 when, for example, the vehicle is parked and has access to a utility power source 220. In some embodiments, the utility power network 208 can also provide power to operate the transport climate control load network 212 when, for example, the vehicle is parked and has access to a utility power source. The utility power network 208 includes the AC-DC converter 225. The utility power source (e.g., shore power, etc.) 220 can be connected to the AC-DC converter 225 to provide AC power input to the AC-DC converter 225. The AC- DC converter 225 is configured to convert the AC power from the utility power source 220 and to provide converted DC power to the power conversion module 240.

While Fig. 2 shows a single AC-DC converter 225, it is appreciated that in other embodiments the power system 200 can include two or more AC-DC converters. In embodiments where there are two or more AC-DC converters, each of the AC-DC converters can be connected to the utility power 220 to provide additional power capacity to the power system 200. In some embodiments, each of the AC-DC converters can provide different amounts of power. In some embodiments, each of the AC-DC converters can provide the same amount of power.

In some embodiments, the utility power 220 can be connected directly to the compressor 255 and provide power to drive the compressor 255 thereby bypassing the inverter 250. In some embodiments, the inverter 250 can be used as an AC-DC converter and convert power received from the utility power 220 into DC power that can be provided by the inverter 250 to the load DC bus 202.

In some embodiments, the compressor 255 can be a variable speed compressor. In other embodiments, the compressor 255 can be a fixed speed (e.g., two-speed) compressor. Also, in some embodiments, the heater 275 can be configured to receive power from the inverter 250. While the compressor 255 shown in Fig. 2 is powered by AC power, it will be appreciated that in other embodiments the compressor 255 can be powered by DC power or mechanical power. Further, in some embodiments, the prime mover 210 can be directly connected (not shown) to the compressor 255 to provide mechanical power to the compressor 255.

When the compressor 255 and/or the heater 275 are powered directly by the utility power 220, the compressor 255 and/or the heater 275 can be turned on and off (e.g., operate in a start/stop mode) in order to control the amount of cooling provided by the compressor 255 and/or the amount of heating provided by the heater 275.

The controller 260 is configured to monitor and control operation of the transport climate control system. In particular, the controller 260 can control operation of the compressor 255, the heater 275, the one or more condenser fans 270, the one or more evaporator blowers 265 and any other components of the vehicle powered transport climate control system. In some embodiments, the controller 260 can monitor the amount of power drawn by the components of the transport climate control load network 212. The controller 260 can also be configured to control the power system 200. The power system 200 can also include one or more sensors (not shown) that are configured to measure one or more power parameters (e.g., voltage, current, etc.) throughout the power system 200 and communicate power parameter data to the controller 260. As shown in Fig. 2, the controller 260 can communicate with all of the components of the transport power system 200 via a communication link (shown with dash-dot lines).

In an embodiment, the power system 200 can power the transport climate control systems 100, 124, 135, 155 shown in Figs. 1A-1D in at least two power modes. In particular, in a first power mode, the power system 200 supplies power to the transport climate control load network 212 from the prime mover power network 204 and, in a second power mode, the power system 200 supplies power to the transport climate control load network 212 solely from the auxiliary power network 206 i.e. from the one or more batteries. The controller 260 may be configured to detect when the power demand by the transport climate control load network 212 is below a predefined threshold power and automatically switch from the first power mode to the second power mode. For example, where the transport climate control system 100, 124, 135, 155 only needs to circulate air using the evaporator blowers 265 and no heating or cooling is required (for example, in a "fresh" or "null" mode when the setpoint temperature has been achieved), the power system 200 can supply sufficient power from the energy storage source 230 and so the prime mover 210 can be switched off. This may be particularly beneficial in urban areas in order to reduce emissions. The controller 260 may detect the power demand directly using suitable sensors or may infer the power demand based on the operating conditions of the transport climate control system 100, 124, 135, 155, for example based on the operating mode.

The evaporator blowers 265 have variable speed motors, such as 48V DC motors. In the second power mode, the controller 260 sets the speed of the evaporator blowers 265 such that it is lower than when in the first power mode. This reduces the energy consumption when power is being supplied solely from the auxiliary power network 206 i.e. from the one or more batteries.

The controller 260 may estimate a predicted duration of operation in the second power mode and set the speed of the blowers 265 based on the predicted duration. For example, where the second power mode is activated in order to reduce emissions in an urban area, the controller may estimate the predicted duration based on when the vehicle is expected to leave the urban area. The controller 260 may use traffic data and predictions, such as average traffic levels, current traffic updates and alerts, or the like, to estimate the future location of the vehicle with respect to time and identify when the first power mode can be reactivated. The speed of the blowers 265 can be set by the controller 260 so as to ensure that the auxiliary power network 206 is able to satisfy the power demand for the predicted duration. The controller 260 uses information from the auxiliary power network 206 concerning the remaining energy stored, e.g. the state of charge of the one or more batteries, to calculate and set the speed of the blowers 265. For example, if the second power mode is only required for 1 hour, the controller 260 may set the blowers 265 at a higher speed than if the second power mode is required for 3 hours (e.g. if the higher speed would result in the remaining energy being used before the end of the predicted duration). The speed of the blowers 265 and the predicted duration may therefore be inversely proportional over at least part of the operating range of the predicted duration. On the other hand, the speed of the blowers 265 and the remaining energy may be directly proportional over at least part of the operating range of the remaining energy such that a higher speed is used where more energy remains. In some examples, the speed of the blowers 265 may be changed at discrete steps/thresholds of the predicted duration and/or remaining energy.

In calculating the speed of the blowers 265, the controller 260 may take into account the energy required to restart the prime mover. Accordingly, the controller 260 may avoid the auxiliary power network 206 becoming so depleted that the prime mover is unable to restart. The energy required to restart the prime mover may be a dynamic value based on the temperature of the prime mover (i.e. the colder the engine the greater the power required to restart). The controller 260 may be adaptive such that when a power source with greater capacity is connected to the TRU, the evaporator blowers 265 can operate at higher speeds when in the second power mode.

The controller 260 may receiving information regarding a charge level of the energy storage source 230 and only switch to the second power mode where there is sufficient charge remaining e.g. where the charge level exceeds a threshold. The threshold charge level may be determined dynamically based on information regarding the route of the vehicle and conditions impacting the route. In other embodiments, the controller 260 may switch to the second power mode regardless of the remaining charge in the energy storage source 230. In particular, the power from the auxiliary power network 206 may be used in preference of the prime mover power network 204 and if the energy storage source 230 becomes depleted sufficiently that it can no longer provide the necessary power, then the power system 200 can return to the first power mode with the prime mover 210 being switched on again. Accordingly, the controller 260 may use the auxiliary power network 206 alone whenever it is able to provide sufficient power.

In other embodiments, the controller 260 may only activate the second power mode in certain locations. For example, the controller 260 may use GPS data to determine if the vehicle is within a certain area (for example, within a town or city boundary) and only activate the second power mode in such an area.

In an embodiment, the controller 260 obtains information regarding a weather forecast. In particular, the weather forecast information may be provided based on the current location of the vehicle as determined using GPS or may be provided based on a future location of the vehicle as determined by a predetermined route. The controller 260 may also use traffic data and predictions, such as average traffic levels, current traffic updates and alerts, or the like, to estimate the future location of the vehicle with respect to time. The weather forecast may include information regarding cloud cover, solar intensity, and the like. Based on the weather forecast information, the controller 260 is able to estimate a future power output of the solar panels 233.

Where the controller 260 determines that the future power output of the solar panels 233 exceeds a threshold value, the controller 260 is configured to utilize the energy storage source 230 in order to provide power to the transport climate control load network 212. For example, the controller 260 may switch to the second power mode such that power is provided solely by the auxiliary power network 206 or may switch to a third power mode where power from the prime mover power network 204 is supplemented by power from the auxiliary power network 206. The energy storage source 230 may therefore be depleted before the power output of the solar panels 233 exceeds the threshold value and so can be recharged from the solar panels 233 at that future time. Without such predictive action, power from the solar panels 233 may be wasted since there is a surplus which cannot be stored in the energy storage source 230.

As described above, the controller 260 may take into account the charge level of the energy storage source 230 when determining whether to switch to the second power mode. The power provided by the auxiliary power network 206 in the second power mode may also include a contribution from the solar panels 233. The controller 260 may utilize the weather forecast information to estimate a future power output of the solar panels 233 which can be used, along with the charge level of the energy storage source 230, to determine whether to switch to the second power mode.

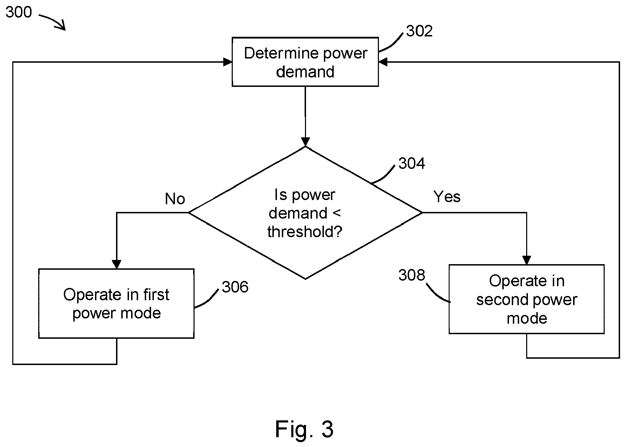

Fig. 3 is a flowchart of a method 300 for controlling a transport climate control system (e.g., the transport climate control systems 100, 124, 135, 155 shown in Figs. 1A-1D), according to one embodiment. The transport climate control system can be powered by, for example, the power system 200 shown in Fig. 2.

At 302, a controller (e.g. climate controller 107, 130, 145, or 180) determines a power demand of the transport climate control system i.e. the transport climate control load network 212.

At 304, the controller determines whether the power demand is less than a threshold power. If the power demand is not less than the threshold, then the controller, at 306, configures the power system 200 to operate in the first power mode in which power is supplied to the transport climate control load network 212 from the prime mover power network 204. If the power demand is less than the threshold, then the controller, at 308, configures the power system 200 to operate in the second power mode in which power is supplied to the transport climate control load network 212 solely from the auxiliary power network 206. The method returns to 302 where the controller repeatedly assesses the power demand. This power demand may be assessed at a set time interval or in response to a trigger. For example, a change in an operating mode of the transport climate control system may trigger the controller to assess the power demand and/or change the power mode.

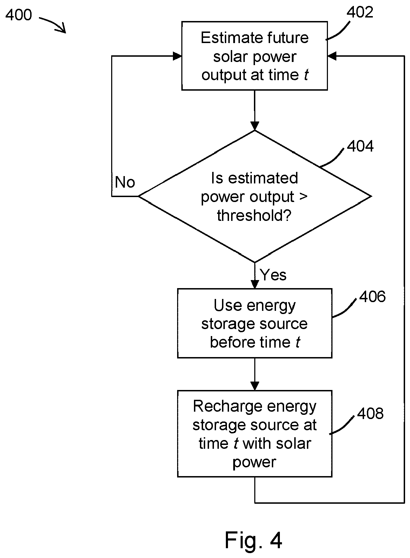

Fig. 4 is a flowchart of a method 400 for controlling a transport climate control system (e.g., the transport climate control systems 100, 124, 135, 155 shown in Figs. 1A-1D), according to another embodiment. The transport climate control system can be powered by, for example, the power system 200 shown in Fig. 2.

At 402, a controller (e.g. climate controller 107, 130, 145, or 180) estimates a future power output at time t of the one or more solar panels 233. The future power output may be estimated based on weather forecast information, such as solar intensity and/or cloud cover. The weather forecast information may be based on the location of the transport unit at the time t.

At 404, the controller determines whether the future power output is greater than a threshold power. If the power demand is determined to be greater than the threshold, then the controller, at 406, configures the power system 200 to operate in a power mode in which power is supplied to the transport climate control load network 212 from the auxiliary power network 206 in preference of the prime mover power network 204. In other words, the power system 200 supplies power from the energy storage source 230 before providing power from the prime mover 210. Accordingly, the prime mover 210 can be switched off or its operation minimized. The energy storage source 230 is therefore used and so depleted before the time *t.*

At 408, the energy storage source 230 can be recharged at time t using the solar panels 233 since they provide sufficiently high output to do so.

As an example, the solar panels 233 may be producing very little power as a result of the current weather conditions. However, the controller may determine from weather forecast information that the weather conditions will change in 1 hour such that the solar panels will at that time produce sufficient power to recharge the energy storage source 230. The controller may therefore utilize power from the energy storage source 230 for the next hour so that the power from the solar panels 233 can be put to use at that later time. Accordingly, the use of the prime mover 210 can be reduced.

The terminology used in this specification is intended to describe particular embodiments and is not intended to be limiting. The terms "a," "an," and "the" include the plural forms as well, unless clearly indicated otherwise. The terms "comprises" and/or "comprising" when used in this specification, indicate the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts, without departing from the scope of the present disclosure. The word "embodiment" as used within this specification may, but does not necessarily, refer to the same embodiment. This specification and the embodiments described are examples only. Other and further embodiments may be devised without departing from the basic scope thereof, with the true scope and spirit of the disclosure being indicated by the claims that follow.

## Claims

1. A transport climate control system, comprising:
a climate control circuit having a compressor, a condenser, an evaporator and an expansion valve to provide conditioned air to a climate-controlled space of a transport unit;
a prime mover configured to provide power to components of the climate control circuit;
an energy storage source configured to provide power to components of the climate control circuit; and
a controller configured to determine a power demand of the climate control circuit and to provide power to the climate control circuit in a first power mode when the power demand is above a power threshold and to provide power to the climate control circuit in a second power mode when the power demand is at or below the power threshold;
wherein, in the first power mode, power is provided from the prime mover and, in the second power mode, power is provided from the energy storage source and not the prime mover;
wherein the controller is configured to control a fan of the evaporator such that it operates at a lower speed when in the second power mode than when in the first power mode.

2. A transport climate control system as claimed in claim 1, wherein the controller is configured to set the speed of the evaporator fan based on remaining energy in the energy storage source.

3. A transport climate control system as claimed in claim 2, wherein the controller is configured to predict a duration of second power mode usage and set the speed of the evaporator fan based on the predicted duration and the remaining energy in the energy storage source.

4. A transport climate control system as claimed in claim 1,
wherein, in the second power mode, power is provided exclusively from the energy storage source; and/or
wherein, in the first power mode, power is provided exclusively from the prime mover.

5. A transport climate control system as claimed in any preceding claim, wherein, in the second power mode, the prime mover is switched off.

6. A transport climate control system as claimed in any preceding claim, wherein the controller is configured to use the second power mode when the compressor of the climate control circuit is not active.

7. A transport climate control system as claimed in any preceding claim, wherein the controller is configured to use the second power mode when a setpoint temperature is reached.

8. A transport climate control system as claimed in any preceding claim, wherein the controller dynamically determines the threshold power.

9. A transport climate control system as claimed in claim 8, wherein the controller is configured to determine the threshold power based on the power available in the second power mode.

10. A transport climate control system as claimed in any preceding claim, wherein the energy storage source comprises one or more batteries.

11. A transport climate control system as claimed in any preceding claim, wherein the controller determines the power demand based on an operating mode or condition of the climate control circuit.

12. A method for controlling a transport climate control system, comprising:
determining a power demand of a transport climate control circuit of the system;
where the demand is above a power threshold, providing power to the transport climate control circuit in a first power mode using a prime mover where an evaporator fan of the transport climate control circuit operates at a first speed; and
where the demand is at or below the power threshold, providing power to the transport climate control circuit in a second power mode using an energy storage source and not the prime mover where the evaporator fan of the transport climate control circuit operates at a second speed which is lower than the first speed.

13. A transport climate control system, comprising:
a climate control circuit having a compressor, a condenser, an evaporator and an expansion valve to provide conditioned air to a climate-controlled space of a transport unit;
an energy storage source configured to provide power to components of the climate control circuit;
a prime mover configured to provide power to components of the climate control circuit;
one or more solar panels configured to provide power to components of the climate control circuit and/or the energy storage source; and
a controller configured to:
estimate a future power output of the one or more solar panels at a time t;
where the future power output exceeds a threshold value, provide power to components of the climate control circuit using the energy storage source in preference of the prime mover so as to deplete the energy storage source before the time t; and
recharge the energy storage source using the one or more solar panels at the time t.

14. A transport climate control system as claimed in claim 13, wherein the controller receives weather forecast information and determines the future power output of the one or more solar panels based on the weather forecast information.

15. A transport climate control system as claimed in claim 14, wherein the controller receives GPS information and determines the future power output of the one or more solar panels based on the weather forecast information and the GPS information.

16. A transport climate control system as claimed in claim 15, wherein the controller receives route information and determines the future power output of the one or more solar panels based on the weather forecast information for an estimated location of the transport unit at time t.

17. A transport climate control system as claimed in any of claims 14 to 16, wherein the weather forecast information includes solar intensity and/or cloud cover data.

18. A method for controlling a transport climate control system, comprising:
estimate a future power output of one or more solar panels of the transport climate control system at a time *t;* and
where the future power output exceeds a threshold value, providing power to components of a climate control circuit of the transport climate control system using an energy storage source in preference of a prime mover so as to deplete the energy storage source before the time *t;* and
recharging the energy storage source using the one or more solar panels at the time *t.*
